# EUROPEAN PATENT APPLICATION

(11) **EP 4 697 406 A1**
(43) Date of publication of application: **18.02.2026**
(21) Application number: 24788606.2
(22) Date of filing: 29.03.2024
(51) Int. Cl.: H01M 4/139, B05C 11/02

(54) **METHOD FOR MANUFACTURING ELECTRODE LAYER AND APPARATUS FOR MANUFACTURING ELECTRODE LAYER**

(30) Priority: 13.04.2023 JP 2023065945
(71) Applicant: FUJIFILM Corporation, Tokyo 106-8620 (JP)
(72) Inventor: KODAMA, Taiga, ashigara-shi, Kanagawa 250-0193 (JP); IWASE, Eijiro, ashigara-shi, Kanagawa 250-0193 (JP)
(74) Representative: Meissner Bolte Partnerschaft mbB
(86) International application number: PCT/JP2024/013343
(87) International publication number: WO 2024/214579

(57) **Abstract**

An electrode material contains an electrode active material and has a concentration of solid components of 40% by volume or more, a forming member 20 has an ultrasonic vibration applying surface 22 where an ultrasonic wave is applied by an ultrasound oscillator 12, and a rectangular vibration surface 24 in contact with the electrode material 40, a distance between the ultrasonic vibration applying surface and at least a part of the vibration surface is a multiple of a half-wavelength of ultrasonic longitudinal vibration which propagates in the forming member by the ultrasound oscillator, and the vibration surface resonates with the ultrasonic wave applied to the ultrasonic vibration applying surface by the ultrasonic oscillator, and longitudinally vibrates uniformly over a width direction of the forming member, and the electrode material is spread on the surface of the collector foil by bringing the electrode material on the surface of the collector foil 30 transported in the first direction into contact with the vibration surface of the forming member to form an electrode material film 44.

## Description

### BACKGROUND OF THE INVENTION

### 1. Field of the Invention

The present invention relates to a method for manufacturing an electrode layer and a manufacturing apparatus for an electrode layer.

### 2. Description of the Related Art

In recent years, development of a quasi-solid-state battery or an all-solid-state battery has been studied.

Manufacturing of an electrode applied to the quasi-solid-state battery or the all-solid-state battery includes, for example, a step of applying an electrode material containing an electrode active material or the like, which is a powder, onto a substrate.

For example, JP2017-533548A discloses a method of manufacturing an electrochemical cell, the method including a step of coating a first surface of a positive electrode collector with a semi-solid cathode, a step of coating a first surface of a negative electrode collector with a semi-solid anode, a step of disposing a separator between the semi-solid cathode and the semi-solid anode, a step of disposing the positive electrode collector, the negative electrode collector, and the separator in a pouch, and a step of sealing the pouch to form an electrochemical cell.

JP2019-503043A discloses a method for infusing a fiber material with an active paste in manufacturing an electrode of a lead-acid battery or a cell, the method including moving the fiber material through a limited attachment area of a paste application stage or moving the fiber material in a reverse direction, where the fiber material has a length of a principal plane in a machine direction and the fiber material, a width between edges in a principal plane of a fiber sheet material and a length direction of the fiber sheet material, and a thickness perpendicular to the principal plane of the material, and has a maximum inter-fiber spacing of 100 microns, the paste application stage including a paste based on Pb in the limited attachment area, continuously supplying the paste to the limited attachment area, vibrating the paste in the limited attachment area, maintaining a pressure on the vibrating paste, and preventing the paste to be infused in the fiber material from leaking out from an edge of the fiber sheet material in the length direction, and continuously infusing the fiber material with the paste through a main surface of the moving fiber material and through the thickness of the fiber sheet material.

JP2021-178271A discloses a powder coating device including a driving unit which moves a member in a predetermined direction, a powder supply unit which supplies powder onto a surface of the member, and a squeegee which is disposed so that a gap is formed between the member and the squeegee and adjusts a thickness of the powder supplied onto the surface of the member by the powder supply unit, in which the squeegee vibrates at a frequency of 2 kHz or more and 300 kHz or less.

JP2021-44152A discloses a method for manufacturing a lithium ion battery, which has a configuration in which a set of a positive electrode collector, a positive electrode active material layer, a separator, a negative electrode active material layer, and a negative electrode collector are laminated in this order, an outer periphery of the positive electrode active material layer and an outer periphery of the negative electrode active material layer are sealed with a sealing material, and an electrolytic solution is sealed, the method including a step of manufacturing a positive electrode and/or a negative electrode by a method including a supply step of supplying an electrode active material composition containing electrode active material particles and an electrolytic solution to a space surrounded by a frame-shaped sealing material and a bottom surface member, and a compression step of compressing the electrode active material composition to form an electrode active material layer.

### SUMMARY OF THE INVENTION

For example, an electrode active material composition of a lithium ion battery is a mixture of metal powder and an electrolytic solution, and has a large cohesive force and a large adhesive force. In such an electrode active material composition, in a case where a volume content of the solid content is more than 40%, fluidity is extremely low, and it is considered that it is difficult to form the electrode active material composition in a film shape or a layered shape by the methods or devices disclosed in JP2017-533548A, JP2019-503043A, JP2021-178271A, and JP2021-44152A.

An object of the present disclosure is to provide a method for manufacturing an electrode layer and a manufacturing apparatus for an electrode layer, in which an electrode material film can be formed by spreading an electrode material having low fluidity, which is scattered on a collector foil.

As a means for achieving the above-described object, the present disclosure includes the following aspects.
<1> A method for manufacturing an electrode layer, comprising:
   a step A of transporting a collector foil in which an electrode material is scattered on a surface in a first direction with respect to a forming member installed at a position where a certain distance is maintained from the surface of the collector foil, to bring the forming member into contact with the electrode material,
   in which, in the step A,
      the electrode material contains an electrode active material and has a concentration of solid components of 40% by volume or more,
      the forming member has an ultrasonic vibration applying surface where an ultrasonic wave is applied by an ultrasound oscillator, and a rectangular vibration surface in contact with the electrode material,
      a distance between the ultrasonic vibration applying surface and at least a part of the vibration surface is a multiple of a half-wavelength of ultrasonic longitudinal vibration which propagates in the forming member by the ultrasound oscillator, and
      the vibration surface resonates with the ultrasonic wave applied to the ultrasonic vibration applying surface by the ultrasonic oscillator, and longitudinally vibrates over a width direction of the forming member, and the electrode material is spread on the surface of the collector foil by bringing the electrode material on the surface of the collector foil transported in the first direction into contact with the vibration surface of the forming member to form an electrode material film.
<2> The method for manufacturing an electrode layer according to <1>,
   in which the forming member is installed with a gap between the vibration surface and the surface of the collector foil, the gap being narrowed in the first direction.
<3> The method for manufacturing an electrode layer according to <1> or <2>,
   in which the forming member has a slit which is parallel to a direction of the longitudinal vibration and penetrates in a thickness direction.
<4> The method for manufacturing an electrode layer according to any one of <1> to <3>,
   in which a frequency of the ultrasonic wave applied to the ultrasonic vibration applying surface of the forming member by the ultrasound oscillator is 15 kHz to 120 kHz.
<5> The method for manufacturing an electrode layer according to any one of <1> to <4>,
   in which an amplitude of the longitudinal vibration on the vibration surface of the forming member is 1 µm to 100 µm at a portion where a gap between the vibration surface and the surface of the collector foil is narrowest.
<6> The method for manufacturing an electrode layer according to any one of <1> to <5>,
   in which, in the forming member, as an area ratio between an area of the ultrasonic vibration applying surface and an area of the vibration surface is changed, a difference is introduced between an amplitude of the ultrasonic wave applied to the ultrasonic vibration applying surface by the ultrasound oscillator and an amplitude of the vibration surface.
<7> The method for manufacturing an electrode layer according to any one of <1> to <6>,
   in which, in the step A, a thickness of the electrode material film is defined by a gap between a portion of the vibration surface of the forming member, where a distance with the surface of the collector foil is narrowest, and the surface of the collector foil.
<8> A manufacturing apparatus for an electrode layer, comprising:
   a transport device that transports, in a first direction, a collector foil which has an electrode material scattered on a surface; and
   a film forming device that includes a forming member which has an ultrasonic vibration applying surface where an ultrasonic wave is applied and a rectangular vibration surface in contact with the electrode material, and is installed at a position where a certain distance is maintained from the surface of the collector foil, and an ultrasound oscillator which applies the ultrasonic wave to the ultrasonic vibration applying surface of the forming member,
   in which a distance between the ultrasonic vibration applying surface and at least a part of the vibration surface is a multiple of a half-wavelength of ultrasonic longitudinal vibration which propagates in the forming member by the ultrasound oscillator, and
   the vibration surface resonates with the ultrasonic wave applied to the ultrasonic vibration applying surface by the ultrasonic oscillator, and longitudinally vibrates uniformly over a width direction of the forming member, and the electrode material is spread on the surface of the collector foil by bringing the electrode material on the surface of the collector foil transported in the first direction into contact with the vibration surface of the forming member to form an electrode material film.
<9> The manufacturing apparatus for an electrode layer according to <8>,
   in which the forming member is installed with a gap between the vibration surface and the surface of the collector foil, the gap being narrowed in the first direction.

According to the present disclosure, there are provided a method for manufacturing an electrode layer and a manufacturing apparatus for an electrode layer, in which an electrode material film can be formed by spreading an electrode material having low fluidity, which is scattered on a collector foil.

### BRIEF DESCRIPTION OF THE DRAWINGS

FIG. 1 is a schematic side view showing an example of a configuration of a film forming device used in the method for manufacturing an electrode layer according to the present disclosure.
FIG. 2 is a schematic front view showing the example of the configuration of the film forming device used in the method for manufacturing an electrode layer according to the present disclosure.
FIG. 3 is a schematic side view showing an example of the method for manufacturing an electrode layer and the manufacturing method of an electrode layer according to the present disclosure.
FIG. 4 is a schematic top view showing the example of the method for manufacturing an electrode layer according to the present disclosure.
FIG. 5 is a schematic front view showing another example of the configuration of the film forming device used in the method for manufacturing an electrode layer according to the present disclosure.
FIG. 6 is a schematic side view showing another example of the configuration of the film forming device used in the method for manufacturing an electrode layer according to the present disclosure.
FIG. 7 is a schematic side view showing still another example of the configuration of the film forming device used in the method for manufacturing an electrode layer according to the present disclosure.
FIG. 8 is a schematic side view showing still another example of the configuration of the film forming device used in the method for manufacturing an electrode layer according to the present disclosure.

### DESCRIPTION OF THE PREFERRED EMBODIMENTS

Hereinafter, embodiments of the present disclosure will be described with reference to the accompanying drawings. The method for manufacturing an electrode layer according to the present disclosure is not limited in any way to the following embodiments, and may be implemented with appropriate modifications within the scope of the purpose of the present disclosure.

The constituent elements indicated by the same reference numeral in each drawing mean the same constituent element. The description of redundant constitutional elements and reference numerals in each drawing may be omitted. A dimensional ratio in the drawings does not necessarily represent the actual dimensional ratio.

In the present disclosure, the numerical ranges shown using "to" indicate ranges including the numerical values described before and after "to" as the lower limit value and the upper limit value. In a numerical range described in a stepwise manner in the present disclosure, an upper limit described in a certain numerical range may be replaced with an upper limit in another numerical range described in a stepwise manner or a value described in an example; and/or a lower limit described in a certain numerical range may be replaced with a lower limit in another numerical range described in a stepwise manner or a value described in an example. In addition, in a numerical range described in the present disclosure, an upper limit or a lower limit described in a certain numerical range may be replaced with a value described in Examples.

In the present disclosure, a term "step" denotes not only an individual step but also a step which is not clearly distinguishable from another step as long as an effect expected from the step can be achieved.

In the present disclosure, in a case where a plurality of substances corresponding to each component in a composition is present, the amount of each component in the composition means the total amount of the plurality of substances present in the composition, unless otherwise specified.

In the present disclosure, a combination of two or more preferred aspects or forms is a more preferred aspect or form.

In the present disclosure, "solid component" means a component in a solid state at 25°C and 1 atm, and "liquid component" means a component in a liquid state at 25°C and 1 atm.

In the present disclosure, "width direction" in a forming member refers to a direction orthogonal to a direction in which the forming member moves relative to a surface of a collector foil (that is, a film forming direction of an electrode material film on the collector foil). That is, the "width direction" of the forming member also corresponds to "width direction" of the electrode material film.

In the present disclosure, "center portion in the width direction" of the forming member refers to a center portion of the forming member in the width direction, and is a region determined according to a width of the electrode material film to be formed on the collector foil.

In the present disclosure, the electrode layer means a layer (electrode material film) of an electrode material on a collector foil.

Examples of an electrode layer applied to a quasi-solid-state battery or an all-solid-state battery include an electrode layer in which an electrode material film containing an electrode active material and having a concentration of solid components of 40% by volume or more is disposed on a collector foil. For example, in a case of an electrode layer applied to a quasi-solid-state battery, the electrode material film is obtained by forming an electrode material containing an electrode active material, a conductive auxiliary agent, and an electrolytic solution into a film on a collector foil, the electrode material having a concentration of solid components of 40% by volume to 80% by volume.

On the other hand, an electrode material in which the concentration of solid components is 40% by volume or more (in the present disclosure, may be simply referred to as "electrode material") is in a clay-like state and has a strong cohesive force or a strong adhesive force, and thus it is difficult to spread the electrode material in a state of being scattered on a collector foil to form a film.

Therefore, the present inventors have conducted intensive studies, and as a result, have found that, by using a forming member capable of applying ultrasonic vibration using a half-wavelength resonator to an electrode material in a scattered state on a collector foil, the scattered electrode material can be spread and formed in a film shape, thereby leading to the method for manufacturing an electrode layer and the manufacturing apparatus for an electrode layer according to the present disclosure.

That is, the method for manufacturing an electrode layer according to the present disclosure is a method including a step A of transporting a collector foil in which an electrode material is scattered on a surface in a first direction with respect to a forming member installed at a position where a certain distance is maintained from the surface of the collector foil, to bring the forming member into contact with the electrode material,
in which, in the step A,
the electrode material contains an electrode active material and has a concentration of solid components of 40% by volume or more,
the forming member has an ultrasonic vibration applying surface where an ultrasonic wave is applied by an ultrasound oscillator, and a rectangular vibration surface in contact with the electrode material,
a distance between the ultrasonic vibration applying surface and at least a part of the vibration surface is a multiple of a half-wavelength of ultrasonic longitudinal vibration which propagates in the forming member by the ultrasound oscillator, and
the vibration surface resonates with the ultrasonic wave applied to the ultrasonic vibration applying surface by the ultrasonic oscillator, and longitudinally vibrates over a width direction of the forming member, and the electrode material is spread on the surface of the collector foil by bringing the electrode material on the surface of the collector foil transported in the first direction into contact with the vibration surface of the forming member to form an electrode material film.

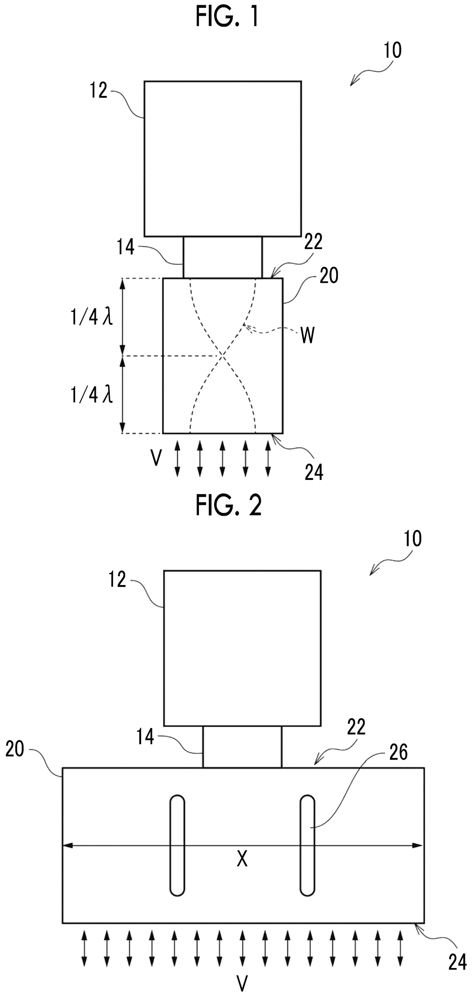

FIG. 1 is a schematic side view showing an example of a configuration of a film forming device (forming device) used in the method for manufacturing an electrode layer according to the present disclosure. FIG. 2 is a schematic front view showing the example of the configuration of the film forming device used in the method for manufacturing an electrode layer according to the present disclosure. For convenience of description, a waveform W is schematically shown in FIG. 1, but is actually a longitudinal wave.

A film forming device 10 includes an ultrasound oscillator 12 and a forming member 20.

The ultrasound oscillator 12 is a member which applies ultrasonic waves to an ultrasonic vibration applying surface 22 of the forming member 20 to cause longitudinal vibration, and a Langhuber type transducer or the like can be used.

The forming member 20 is a half-wavelength resonator, and is made of a metal such as an aluminum alloy, a titanium alloy, and a die steel. The forming member 20 has an ultrasonic vibration applying surface 22 which is connected to the ultrasound oscillator 12 through a vibration transmission portion 14 in a center portion in the width direction and to which ultrasonic vibration is applied by the ultrasound oscillator 12, and a rectangular vibration surface 24 which is in contact with the electrode material. A distance between the ultrasonic vibration applying surface 22 and the vibration surface 24 is set to 1 time the half-wavelength (λ/2) of the ultrasonic longitudinal vibration propagating in the forming member 20 by the ultrasound oscillator 12.

In a width direction (film forming width direction) X, the forming member 20 has a slit 26 which is parallel to a direction of the longitudinal vibration and penetrates in a thickness direction. Since the slit 26 is formed in the forming member 20, even in a case where the width of the forming member 20 is long, a uniform amplitude can be obtained over the width direction (film forming width direction) X of the forming member 20. Here, the expression "longitudinally vibrates uniformly over the width direction (film forming width direction) X of the forming member 20" means that the vibration surface 24 longitudinally vibrates with high uniformity in amplitude and phase regardless of the position of the vibration surface 24 in the width direction X, as indicated by an arrow V in FIGS. 1 and 2. A difference in amplitude at the vibration surface 24, for example, a difference between the amplitude at the center portion in the width direction X and the amplitude at the end portion is preferably 20% or less, more preferably 10% or less, and still more preferably 5% or less.

The number, length, width, and interval of the slits 26 are not particularly limited, and may be set such that the uniform longitudinal vibration can be achieved over the width direction X, depending on the material, shape, and length of the forming member 20, the ultrasonic vibration applied to the ultrasonic vibration applying surface 22, and the like. It is not necessary to provide the slit 26 in the forming member 20, and for example, in a case where the width of the vibration surface 24 is relatively short, it is possible to achieve the uniform longitudinal vibration over the width direction (film forming width direction) X without providing the slit 26.

Next, a method of manufacturing an electrode layer using the film forming device 10 will be described.

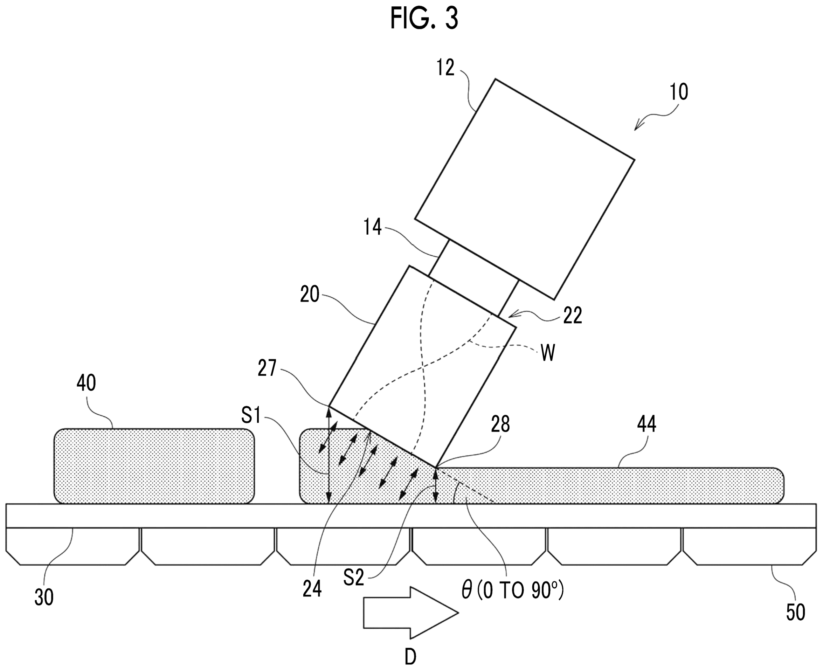

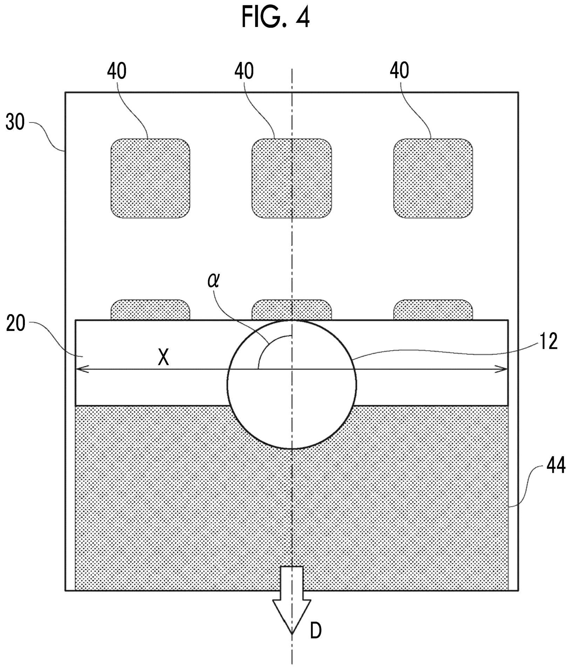

FIG. 3 is a schematic side view showing an example of the method for manufacturing an electrode layer and the manufacturing apparatus of an electrode layer according to the present disclosure. FIG. 4 is a schematic top view showing the example of the method for manufacturing an electrode layer according to the present disclosure. For convenience, in FIG. 4, only an upper surface of the ultrasound oscillator 12 is shown.

The electrode material 40 in a lump shape is scattered on the surface of the collector foil 30 which is a support for forming an electrode material film 44. Each electrode material 40 spreads by coming into contact with the forming member 20 to form the electrode material film 44. As shown in FIG. 4, it is preferable that the electrode material 40 is disposed at predetermined intervals in vertical and horizontal directions on the surface of the collector foil 30, so that voids, thickness unevenness, and the like do not occur in the electrode material film 44. In addition, from the viewpoint of film formation uniformity of the electrode material film 44, an angle α formed by a transport direction D of the collector foil 30 and the width direction X of the forming member 20 is preferably 90° ± 1°.

As the collector foil 30 and the electrode material 40, known materials can be used. Each of specific material and the like will be described later.

The forming member 20 is installed at a position where a certain distance is maintained from the surface of the collector foil 30, and is inclined with respect to the transport direction D such that a gap between the vibration surface 24 and the surface of the collector foil 30 is narrowed toward the first direction (transport direction) D. As shown in FIG. 3, in the side view, a gap S1 between a tip part 27 of the vibration surface 24 of the forming member 20 and the surface of the collector foil 30 in the transport direction D of the collector foil 30 is larger than a height of the electrode material 40 transported toward the forming member 20, and a gap S2 between a terminal part 28 of the vibration surface 24 and the surface of the collector foil 30 is smaller than the height of the electrode material 40.

A thickness of the electrode material film 44 is defined by a gap between a portion (terminal part 28) of the vibration surface 24 of the forming member 20, where a distance with the surface of the collector foil 30 is the narrowest, and the surface of the collector foil 30.

Depending on the formulation of the electrode material 40, the target thickness of the electrode material film 44, and the like, an amplitude of the longitudinal vibration in the vibration surface 24 of the forming member 20 is preferably 1 µm to 100 µm and more preferably 10 µm to 60 µm at the portion (terminal part) 28 where the gap with the surface of the collector foil 30 is the narrowest, from the viewpoint of film-forming properties.

In the forming member 20, as an area ratio between an area of the ultrasonic vibration applying surface 22 and an area of the vibration surface 24 is changed, a difference can be introduced between the amplitude of the ultrasonic wave applied to the ultrasonic vibration applying surface by the ultrasound oscillator and the amplitude of the vibration surface 24.

The vibration surface 24 resonates with the ultrasonic wave applied to the ultrasonic vibration applying surface 22 from the ultrasound oscillator 12, and longitudinally vibrates uniformly in the V direction over the width direction X of the forming member 20.

From the viewpoint of film-forming properties of the electrode material, an angle θ formed by the vibration surface 24 and the transport direction D is preferably 0° < θ < 90°, more preferably 10° ≤ θ ≤ 80°, and still more preferably 20° ≤ θ ≤ 60°.

A frequency of the ultrasonic wave applied to the ultrasonic vibration applying surface 22 of the forming member 20 by the ultrasound oscillator 12 is, for example, 15 kHz to 120 kHz, from the viewpoint of film-forming properties of the electrode material film 44 due to the longitudinal vibration of the vibration surface 24.

On the other hand, the collector foil 30 in which the electrode material 40 is scattered on the surface is transported in the first direction D. As a transport device 50 for the collector foil 30, a known transport unit can be used. For example, a belt conveyor, a linear motion guide, a cross roller table, or the like can be used.

In addition, a method of scattering the electrode material 40 on the surface of the collector foil 30 is not particularly limited, and a known method can be used. The method of scattering the electrode material 40 on the collector foil 30, that is, the method of disposing the electrode material 40 in a dispersed manner is not particularly limited; and examples thereof include a method of scattering and supplying a plurality of lumps of the electrode material on the collector foil from the viewpoint of easily adjusting the size of the lumps of the electrode material, the viewpoint of easily adjusting the dispersion state of the lumps, and the viewpoint of stabilizing the supply amount. That is, by scattering and supplying the plurality of lumps of the prepared electrode material onto the collector foil, the plurality of lumps of the electrode material can be dispersed and arranged on the collector foil.

The plurality of lumps of the electrode material used for the scattering supply can be produced by a known granulating method capable of granulating with the electrode material.

Examples of the granulating method include an extrusion granulation method, a pulverization granulation method, a compression granulation method, a wet (aggregation) granulation method, and a granulation method using a die.

The lumps obtained by the granulating method are scattered and supplied onto the collector foil by known transporting and supplying units.

In addition, the scattering supply can be carried out by relatively moving the supply unit along the surface of the collector foil.

A diameter of the electrode materials 40 dispersed and arranged on the collector foil is, for example, preferably 0.1 mm to 20 mm, more preferably 0.5 mm to 10 mm, and still more preferably 1 mm to 5 mm.

A known method of obtaining an equivalent circle diameter is used for measuring the diameter of the electrode material 40. That is, the diameter of the electrode material means an equivalent circle diameter of the electrode material 40.

An average height of the electrode materials 40 dispersed and arranged on the collector foil is, for example, preferably 0.1 mm to 10 mm, more preferably 0.5 mm to 10 mm, and still more preferably 1 mm to 5 mm.

In the plurality of the electrode materials 40 dispersed and arranged on the collector foil, a distance between area centroids of adjacent electrode materials 40 is preferably 0.1 mm to 50 mm, more preferably 1 mm to 20 mm, and still more preferably 5 mm to 10 mm.

A region occupied by the plurality of the electrode materials 40 dispersed and arranged on the collector foil (hereinafter, also referred to as an area ratio of the electrode material) is preferably 10% to 90%, more preferably 10% to 40%, and still more preferably 10% to 20% with respect to the region where the electrode material film 44 is formed on the collector foil.

Here, the region on the collector foil, where the electrode material film 44 is formed, refers to a region where the electrode material 40 comes into contact with the forming member 20, passes through the forming member 20, and is integrated with the forming member 20 to form the electrode material film 44; and corresponds to a region on the collector foil 30, which is covered with the electrode material film 44. In a case where the collector foil 30 as a support is a collector or a laminate of a collector and a resin film, an area of the collector is the region where the electrode material film is formed.

The collector foil 30 in which the electrode material 40 is scattered on the surface of the collector foil 30 is transported in the first direction D with respect to the forming member 20 which is disposed by being inclined with respect to the transport direction D of the collector foil 30 and in which the vibration surface 24 longitudinally vibrates, thereby bringing the forming member 20 into contact with the electrode material 40. As shown in FIG. 3, since the electrode material 40 on the transported collector foil 30 comes into contact with the vibration surface 24 which longitudinally vibrates, for example, in a case of a quasi-solid, the electrode material 40 having a clay-like shape is fluidized, the height thereof is reduced and the electrode material 40 spreads on the collector foil 30, and the electrode material film 44 integrated is formed by passing through the terminal part 28 of the vibration surface 24.

A transportation speed of the collector foil 30 in the first direction D is not particularly limited; but in a case where the transportation speed is too slow, productivity is lowered, and there is a possibility that the treatment of the electrode material 40 by the longitudinal vibration is excessive, which affects the electrolytic solution and the conductive auxiliary agent. On the other hand, in a case where the transportation speed is too fast, there is a possibility that the treatment of the electrode material 40 by the longitudinal vibration is insufficient, which may result in the uniformity of the thickness of the electrode material film 44 or the occurrence of coating defects. From such a viewpoint, the transportation speed of the collector foil 30 is preferably 1 to 50 m/min, more preferably 10 to 40 m/min, and still more preferably 20 to 30 m/min. In addition, from the viewpoint of the uniformity of the thickness of the electrode material film 44, the variation in the transportation speed of the collector foil 30 is preferably ±5% or less.

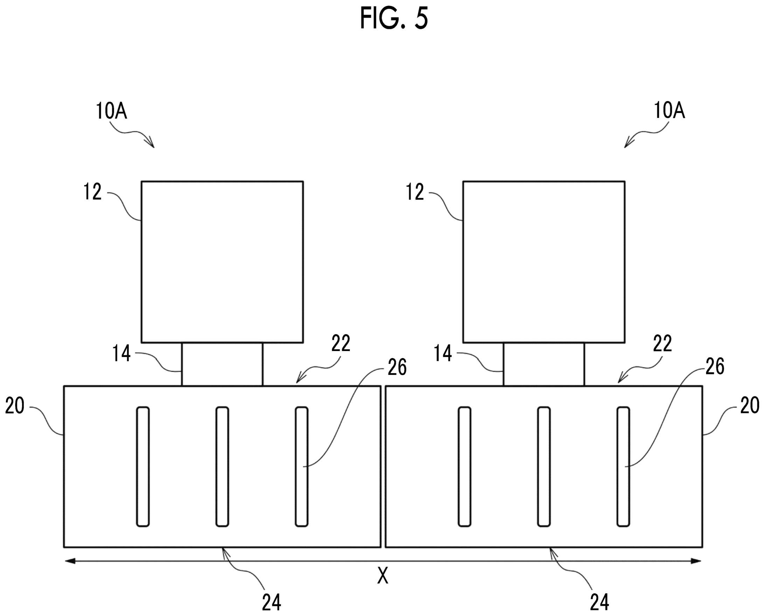

FIG. 5 is a schematic front view showing another example of the configuration of the film forming device used in the method for manufacturing an electrode layer according to the present disclosure. In FIG. 5, film forming devices 10A having the same configuration of the ultrasound oscillator 12 and the forming member 20 are arranged side by side in the film forming width direction X. A gap is provided between two forming members 20. A plurality of the film forming devices 10A are arranged side by side in the film forming width direction X, and the electrode material 40 on the collector foil is brought into contact with the vibration surface 24 of each film forming device 10A which longitudinally vibrates, and as a result, it is possible to form an electrode material film 44 having a wide width.

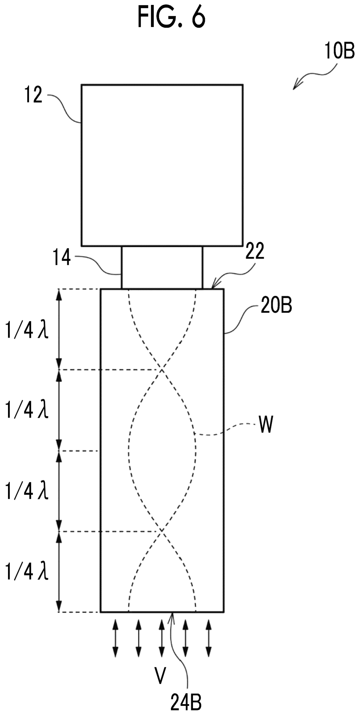

FIGS. 6 to 8 are respectively a schematic side view showing another example of the configuration of the film forming device used in the method for manufacturing an electrode layer according to the present disclosure.

In a forming member 20B shown in FIG. 6, a distance between the ultrasonic vibration applying surface 22 and a vibration surface 24B is twice the half-wavelength of the ultrasonic longitudinal vibration propagating in the forming member 20B by the ultrasound oscillator 12. Even with such a forming member 20B, the vibration surface 24B resonates with the ultrasonic wave applied to the ultrasonic vibration applying surface 22 from the ultrasound oscillator 12, and longitudinally vibrates to the maximum extent to come into contact with the electrode material, whereby the electrode material film can be formed.

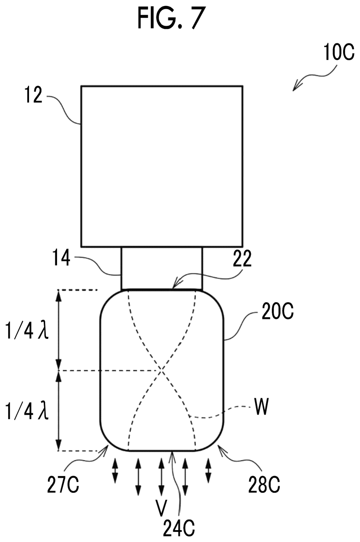

In a forming member 20C shown in FIG. 7, end parts 27C and 28C of a vibration surface 24C have a rounded shape. Since the end parts 27C and 28C of the vibration surface 24C have a rounded shape, it is possible to suppress the end parts 27C and 28C of the forming member 20C from being damaged.

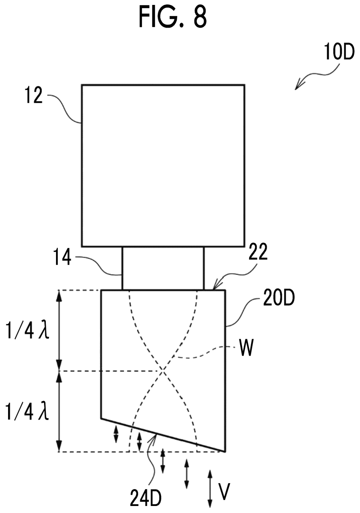

A forming member 20D shown in FIG. 8 has a shape in which a vibration surface 24D is inclined. Since the vibration surface 24D is an inclined surface, the vibration surface 24D can be inclined in a state in which the forming member 20D is not inclined with respect to the transport direction D of the collector foil 30, that is, in a state which the forming member 20D is perpendicular to the surface of the collector foil 30.

A distance between the ultrasonic vibration applying surface 22 and the vibration surface 24C shown in FIG. 7, and a distance between the ultrasonic vibration applying surface 22 and the vibration surface 24D shown in FIG. 8 are not multiples of the half-wavelength of the ultrasonic longitudinal vibration propagating in the inside of the respective forming members 20C and 20D in a part of the vibration surfaces 24C and 24D, and the amplitude decreases as the distance deviates from the distance at which resonance occurs as indicated by the arrow V.

From the viewpoint of film formation uniformity, it is preferable that the distance between the ultrasonic vibration applying surface 22 and the entire vibration surface 24 has a shape in which the distance is a multiple of the half-wavelength of the ultrasonic longitudinal vibration propagating in the forming member 20 by the ultrasound oscillator 12, as in the case of the forming member 20 shown in FIG. 1.

### [Collector foil]

The collector foil 30 is not particularly limited, and known collector foils (a positive electrode collector foil and a negative electrode collector foil) can be used.

Examples of the positive electrode collector foil include foils (that is, metal layers) of aluminum, an aluminum alloy, stainless steel, nickel, and titanium. The positive electrode collector foil is preferably aluminum or an aluminum alloy. The positive electrode collector foil may be aluminum having, on a surface thereof, a coating layer containing one or more of carbon, nickel, titanium, silver, gold, platinum, and vanadium oxide.

Examples of the negative electrode collector foil include foils (that is, metal layers) of aluminum, copper, a copper alloy, stainless steel, nickel, and titanium. The negative electrode collector foil is preferably aluminum, copper, a copper alloy, or stainless steel, and more preferably copper or a copper alloy. The negative electrode collector foil may be copper or stainless steel, having, on a surface thereof, a coating layer containing one or more of carbon, nickel, titanium, silver, and lithium.

The collector foil is preferably an aluminum foil (including an aluminum foil having the above-described coating layer on the surface thereof) or a copper foil (including a copper foil having the above-described coating layer on the surface thereof). The aluminum foil is generally used as the positive electrode collector foil. The copper foil is generally used as the negative electrode collector foil.

As described above, a resin film may be attached to the collector foil.

Examples of the resin film include a polyethylene terephthalate (PET) film, a polypropylene (PP) film, a polyethylene (PE) film, a cyclic olefin polymer (COP or COC) film, a triacetyl cellulose (TAC) film, a polyimide (PI) film, and a polyamide (PA) film.

From the viewpoint of transportability and the like, a thickness of the collector foil (including the case of the laminate) is preferably 3 µm or more, more preferably 5 µm or more, and particularly preferably 10 µm or more.

From the viewpoint of flexibility and lightness, the thickness of the collector foil is preferably 100 µm or less, more preferably 70 µm or less, and particularly preferably 50 µm or less.

The thickness of the collector foil is an arithmetic average value of thicknesses at three points measured by cross-sectional observation. In the cross-sectional observation, a known microscope (for example, a scanning electron microscope) can be used.

### [Electrode material]

The electrode material 40 contains an electrode active material, and has a concentration of solid components of 40% by volume or more.

The electrode material 40 may contain, in addition to the electrode active material, for example, a conductive auxiliary agent and an electrolytic solution, and may further contain an additive as necessary. In a case of manufacturing an electrode layer for an all-solid-state battery, the electrode material 40 may contain an electrolyte without containing a solvent.

### (Electrode active material)

The electrode active material is a substance capable of intercalating and deintercalating ions of a metal element belonging to Group 1 or Group 2 in the periodic table. The electrode active material is included in the solid components.

Examples of the electrode active material include a positive electrode active material and a negative electrode active material.

### -Positive electrode active material-

The positive electrode active material is not limited, and a known electrode active material used for a positive electrode can be used. The positive electrode active material is preferably a positive electrode active material capable of reversibly intercalating and deintercalating lithium ions.

Specific examples of the positive electrode active material include a transition metal oxide and an element (for example, sulfur) which can be compounded with lithium. Among the above, the positive electrode active material is preferably a transition metal oxide.

The transition metal oxide is preferably a transition metal oxide containing at least one transition metal element (hereinafter, referred to as "element Ma") selected from the group consisting of cobalt (Co), nickel (Ni), iron (Fe), manganese (Mn), copper (Cu), and vanadium (V).

In a case where the transition metal oxide contains Li and the element Ma, a molar ratio (Li/Ma) of Li to Ma is preferably 0.3 to 2.2.

In addition, the transition metal oxide may contain at least one transition metal element (hereinafter, referred to as "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), and boron (B). A content of the element Mb is preferably 0 mol% to 30 mol% with respect to a substance amount of the element Ma.

Examples of the transition metal oxide include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxide having a bedded salt-type structure include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Examples of the transition metal oxide having a spinel-type structure include LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound include an olivine-type iron phosphate salt (for example, LiFePO₄ and Li₃Fe₂(PO₄)₃), a pyrroline phosphate salt (for example, LiFeP₂O₇), a cobalt phosphate salt (for example, LiCoPO₄), and a monoclinic vanadium phosphate salt (for example, Li₃V₂(PO₄)₃ (lithium vanadium phosphate)).

Examples of the lithium-containing transition metal halogenated phosphoric acid compound include an iron fluorophosphate (for example, Li₂FePO₄F), a manganese fluorophosphate (for example, Li₂MnPO₄F), and a cobalt fluorophosphate (for example, Li₂CoPO₄F).

Examples of the lithium-containing transition metal silicate compound include Li₂FeSiO₄, Li₂MnSiO₄, and Li₂CoSiO₄.

The transition metal oxide is preferably a transition metal oxide having a bedded salt-type structure, and more preferably at least one compound selected from the group consisting of LiCoO₂ (lithium cobalt oxide [LCO]), LiNi_{0.85}Co_{0.10}Al_{0.05}O₂ (lithium nickel cobalt aluminum oxide [NCA]), and LiNi_{1/3}Co_{1/3}Mn_{1/3}O₂ (lithium nickel manganese cobalt oxide [NMC]).

The positive electrode active material may be a commercially available product, or may be a synthetic product produced with a known method (for example, a baking method). For example, a positive electrode active material obtained by the baking method may be washed with water, an acidic aqueous solution, an alkaline aqueous solution, or an organic solvent.

In addition, the positive electrode active material may have a carbon coating on the surface thereof.

A shape of the positive electrode active material is not limited, but from the viewpoint of handleability, it is preferably a particle shape.

A volume average particle diameter of the positive electrode active material is not limited, and can be, for example, 0.1 µm to 50 µm. The volume average particle diameter of the positive electrode active material is preferably 0.3 µm to 40 µm and more preferably 0.5 µm to 30 µm.

In a case where the volume average particle diameter of the positive electrode active material is 0.3 µm or more, it is possible to suppress the positive electrode active material from being scattered during handling. In a case where the volume average particle diameter of the positive electrode active material is 40 µm or less, the thickness of the electrode material film can be easily adjusted, and generation of voids in the molding process can be suppressed.

The volume average particle diameter of the positive electrode active material is measured by the following method.

A dispersion liquid containing 0.1% by mass or less of the positive electrode active material is prepared by mixing the positive electrode active material with a solvent (for example, pure water, ethanol, heptane, octane, toluene, or xylene). The dispersion liquid is irradiated with ultrasonic waves of 1 kHz for 10 minutes to be used as a measurement sample. Using a laser diffraction/scattering-type particle size distribution analyzer (for example, LA-960 manufactured by Horiba, Ltd.), data is taken in 50 times under a condition of a temperature of 25°C, and a volume average particle diameter is obtained from a volume frequency-particle size distribution. A quartz cell is used as a cell for the measurement. The above-described measurement is carried out using five samples, and an average of the measured values is defined as the volume average particle diameter of the positive electrode active material. For other detailed conditions, "JIS Z 8828: 2013" is referred to as necessary.

Examples of a method of adjusting the particle diameter of the positive electrode active material include a method of using a pulverizer, a disintegrator, or a classifier. In addition, a known milling method may be applied as the method of adjusting the particle diameter of the positive electrode active material.

One kind of the positive electrode active material may be used alone, or two or more kinds thereof may be used in combination.

In addition, even in a case of using one kind of the positive electrode active material, positive electrode active materials having different particle diameters may be used in combination.

A content of the positive electrode active material with respect to the total volume of the electrode material is preferably 30% by volume to 60% by volume, more preferably 35% by volume to 55% by volume, and still more preferably 40% by volume to 50% by volume.

In the method for manufacturing an electrode layer according to the present disclosure, for example, the amount of the positive electrode active material used is determined such that the content in the electrode material film is within the above-described range.

### -Negative electrode active material-

The negative electrode active material is not limited, and a known electrode active material used for a negative electrode can be used. The negative electrode active material is preferably a negative electrode active material capable of reversibly intercalating and deintercalating lithium ions.

Examples of the negative electrode active material include a carbonaceous material, a metal oxide (for example, tin oxide), silicon oxide, a metal composite oxide, a lithium single substance, a lithium alloy (for example, a lithium aluminum alloy), and a metal capable of forming an alloy with lithium (for example, Sn, Si, and In). Among the above, from the viewpoint of reliability, the negative electrode active material is preferably a carbonaceous material or a lithium composite oxide.

The carbonaceous material is a material substantially consisting of carbon.

Examples of the carbonaceous material include a carbonaceous material obtained by firing petroleum pitch, carbon black (for example, acetylene black), graphite (for example, natural graphite or artificial graphite (for example, vapor-grown graphite)), hard carbon, and a synthetic resin (for example, polyacrylonitrile (PAN) and a furfuryl alcohol resin). Examples of the carbonaceous material also include carbon fiber (for example, polyacrylonitrile-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber). Examples of the graphite include mesophase microsphere, graphite whisker, and plate-like graphite.

In the present disclosure, the "plate-like" means a shape having two principal planes facing opposite to each other.

The metal composite oxide is preferably a metal composite oxide capable of intercalating and deintercalating lithium.

From the viewpoint of high current density-charging and discharging characteristics, the metal composite oxide capable of intercalating and deintercalating lithium preferably contains at least one element selected from the group consisting of titanium and lithium.

The metal oxide and the metal composite oxide are particularly preferably an amorphous oxide.

The metal oxide and the metal composite oxide are also preferably a chalcogenide. The chalcogenide is a reaction product of a metal element and an element of Group 16 in the periodic table.

Among compound groups consisting of the amorphous oxide and the chalcogenide, an amorphous oxide of a metalloid element or a chalcogenide is preferable, and an oxide containing at least one element selected from the group consisting of elements belonging to Group 13 to Group 15 in the periodic table, Al, Ga, Si, Sn, Ge, Pb, Sb, and Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions, and the suppression of the deterioration of the electrode can improve life of a lithium ion secondary battery, it is preferable that the negative electrode active material containing titanium is lithium titanium oxide (Li₄Ti₅O₁₂ [LTO]).

The negative electrode active material may be a commercially available product, or may be a synthetic product produced with a known method (for example, a baking method). For example, a negative electrode active material obtained by the baking method may be washed with water, an acidic aqueous solution, an alkaline aqueous solution, or an organic solvent.

The negative electrode active material is available, for example, as CGB20 (Nippon Kokuen Group).

The composition of the negative electrode active material is measured by inductively coupled plasma (ICP) emission spectroscopy.

A shape of the negative electrode active material is not limited, but is preferably a particle shape from the viewpoint of ease of handling and ease of managing uniformity in a case of mass production.

A volume average particle diameter of the negative electrode active material is preferably 0.1 µm to 60 µm, more preferably 0.3 µm to 50 µm, and particularly preferably 0.5 µm to 40 µm.

The volume average particle diameter of the negative electrode active material is measured with a method based on the method of measuring the volume average particle diameter of the positive electrode active material described above.

Examples of a method of adjusting the particle diameter of the negative electrode active material include a method of using a pulverizer or a classifier.

One kind of the negative electrode active material may be used alone, or two or more kinds thereof may be used in combination.

In addition, even in a case of using one kind of the negative electrode active material, negative electrode active materials having different particle diameters may be used in combination.

A content of the negative electrode active material with respect to the total volume of the electrode material is preferably 30% by volume to 60% by volume, more preferably 35% by volume to 57% by volume, and still more preferably0 45% by volume to 55% by volume.

In the method for manufacturing an electrode layer according to the present disclosure, for example, the amount of the negative electrode active material used is determined such that the content in the electrode material film is within the above-described range.

Surfaces of the positive electrode active material and the negative electrode active material may be coated with a surface coating agent, respectively. Examples of the surface coating agent include a metal oxide containing Ti, Nb, Ta, W, Zr, Si, or Li. Examples of the above-described metal oxide include a titanium oxide spinel, a tantalum-based oxide, a niobium-based oxide, and a lithium niobate-based compound.

### (Conductive auxiliary agent)

From the viewpoint of improving electron conductivity of the electrode active material, the electrode material film contains a conductive auxiliary agent. The conductive auxiliary agent is not limited, and a known conductive auxiliary agent can be used.

The conductive auxiliary agent is included in the solid components.

Examples of the conductive auxiliary agent include graphite (for example, natural graphite and artificial graphite), carbon black (for example, acetylene black, Ketjen black, and furnace black), amorphous carbon (for example, needle coke), carbon fiber (for example, vapor-grown carbon fiber and carbon nanotube), other carbonaceous materials (for example, graphene and fullerene), metal powder (for example, copper powder and nickel powder), metal fiber (for example, copper fiber and nickel fiber), and a conductive polymer (for example, polyaniline, polypyrrole, polythiophene, polyacetylene, and a polyphenylene derivative).

The conductive auxiliary agent may be used alone or in combination of two or more kinds thereof.

A content of the conductive auxiliary agent with respect to the total volume of the electrode material is preferably 0.05% by volume to 5% by volume, more preferably 0.1% by volume to 4% by volume, and still more preferably 0.5% by volume to 3% by volume.

In the method for manufacturing an electrode layer according to the present disclosure, the amount of the conductive auxiliary agent used is determined such that the content in the electrode material film is within the above-described range.

### (Electrolytic solution)

The electrolytic solution is not particularly limited, and a known electrolytic solution can be used. Examples of the electrolytic solution include an electrolytic solution containing an electrolyte and a solvent. Specific examples of the electrolytic solution include an electrolytic solution containing a lithium salt compound as the electrolyte and a carbonate compound as the solvent.

Examples of the lithium salt compound include lithium hexafluorophosphate. The electrolytic solution may contain only one kind of the lithium salt compound or may contain two or more kinds of the lithium salt compounds.

Examples of the carbonate compound include a chain-like carbonate compound such as ethyl methyl carbonate (also referred to as EMC), dimethyl carbonate (also referred to as DMC), and diethyl carbonate (DEC); and a cyclic carbonate compound such as ethylene carbonate (also referred to as EC) and propylene carbonate (also referred to as PC). The electrolytic solution may contain only one kind of the carbonate compound, may contain two or more kinds of the carbonate compounds, or may contain a combination of one or more kinds of the chain-like carbonate compounds and one or more kinds of the cyclic carbonate compounds.

As the electrolyte contained in the electrolytic solution, for example, a known inorganic solid electrolyte can also be used.

As a component of the electrolytic solution, for example, an ionic liquid may be used. The ionic liquid may be used as the electrolyte or the solvent.

A content of the electrolytic solution with respect to the total volume of the electrode material is preferably 70% by volume or less, and may be 50% by volume or less or 40% by volume or less. The lower limit of the content of the electrolytic solution with respect to the total volume of the electrode material is not limited, and may be 20% by volume or more or 30% by volume or more.

The content of the electrolytic solution with respect to the total volume of the electrode material is, for example, preferably 30% by volume to 50% by volume.

### (Solvent)

The electrode material film may contain, as the liquid components, a solvent other than the solvent contained as the component of the electrolytic solution (hereinafter, also simply referred to as "solvent").

Examples of the solvent include an alcohol compound solvent, an ether compound solvent, an amide compound solvent, an amino compound solvent, a ketone compound solvent, an aromatic compound solvent, an aliphatic compound solvent, and a nitrile compound solvent.

### (Other components)

The electrode material film may contain a binder, a dispersant, and other additives in addition to the above-described components. From the viewpoint of improving energy density, it is preferable that a content of the binder (also referred to as a resin component) in the electrode material film is low, and it is preferably 1% by mass or less and particularly preferably 0% by mass.

The binder refers to a component known in the electrode material film of the related art, a rheology modifier, and a dispersant; and examples thereof include a fluorine-containing resin, a hydrocarbon-based thermoplastic resin, an acrylic resin, and a urethane resin.

In addition, the dispersant may be a known dispersant which can disperse a dispersion target.

Furthermore, as the other additives, known additives added to the electrode can be used.

### Examples

Hereinafter, the present disclosure will be described in detail with reference to Examples, but the present disclosure is not limited thereto.

### [Preparation of positive electrode material (P1)]

(1) LiPF₆ (electrolyte) was mixed with a mixed solution obtained by mixing ethylene carbonate (EC), propylene carbonate (PC), and diethyl carbonate (DEC), and then vinylene carbonate (VC) was further mixed therewith; 64 g of the obtained mixed solution was taken out, and used as an electrolytic solution X1.
(2) 2 g of a conductive auxiliary agent (Ketjen black) and 174 g of a positive electrode active material (iron phosphate) were stirred at 1,500 revolutions per minute (rpm) for 30 seconds with a mixer (AWATORI RENTARO ARE-310, manufactured by THINKY Corporation) to prepare a kneaded material Y1 (176 g).
(3) The electrolytic solution X1 (64 g) was added to the kneaded material Y1 (176 g), and the mixture was stirred at 1,500 rpm for 120 seconds with a mixer (AWATORI RENTARO ARE-310, manufactured by THINKY Corporation) to obtain a positive electrode material (P1).

In the obtained positive electrode material (P1), a volume ratio of the solid components and the liquid components was 48:52.

Using the positive electrode material (P1), bulk substances (P1) containing a granular substance having a columnar shape (diameter: 3 mm to 5 mm) was obtained by extrusion molding using a mincer (manufactured by Bonny Co.,LTD.).

### [Preparation of collector foil]

Collector foil: positive electrode collector (aluminum foil)

### [Preparation of forming member]

Material: aluminum alloy
Applied ultrasonic vibration frequency: 19.15 kHz
Amplitude of vibration surface: ±20 µm
Film forming width: 200 mm

### <Example 1>

A prepared lump (P1) was scattered and supplied onto a continuously transported collector foil, and a plurality of lumps of electrode materials were dispersed and disposed on the collector foil.

The plurality of lumps dispersed and arranged on the collector foil had an average height of 6 mm, a diameter of 3 mm to 5 mm, a distance between area centroids of adjacent lumps of 10 mm, and an area ratio of 15%.

As shown in FIGS. 3 and 4, the forming member 20 was disposed such that the angle θ formed between the vibration surface and the surface of the collector foil was 20°, the gap S1 between the surface of the collector foil 30 and the tip part 27 of the forming member (half-wavelength resonator) 20 was 15 mm, and the gap S2 between the surface of the collector foil 30 and the terminal part 28 of the forming member (half-wavelength resonator) 20 was 0.3 mm. As shown in FIG. 3, the collector foil 30 was transported and moved in the direction of the arrow D at 6 m/min, and a plurality of lumps (P1) of the electrode material 40 dispersedly disposed on the collector foil 30 were brought into contact with the forming member 20 for penetrating. As a result, the electrode material film 44, which is a continuous film, was formed on the collector foil 30 along the transport direction (the direction of the arrow D) of the collector foil 30. The obtained electrode material film 44 had a film thickness of 0.3 mm.

The disclosure of JP2023-065945 filed on April 13, 2023 is incorporated in the present specification by reference.

### Explanation of References

10: film forming device
12: ultrasound oscillator
14: vibration transmission portion
20: forming member (half-wavelength resonator)
22: ultrasonic vibration applying surface
24: vibration surface
26: slit
30: collector foil (support)
40: electrode material
44: electrode material film
50: transport device
D: first direction (transport direction of collector foil)
X: width direction of forming member (film forming width direction)
V: vertical vibration direction
W: waveform
λ: wavelength
α: angle formed between transport direction of collector foil and film forming width direction
θ: angle formed between vibration surface and surface of collector foil
S1: maximum gap between vibration surface and surface of collector foil
S2: minimum gap between vibration surface and surface of collector foil

## Claims

1. A method for manufacturing an electrode layer, comprising:
a step A of transporting a collector foil in which an electrode material is scattered on a surface in a first direction with respect to a forming member installed at a position where a certain distance is maintained from the surface of the collector foil, to bring the forming member into contact with the electrode material,
wherein, in the step A,
the electrode material contains an electrode active material and has a concentration of solid components of 40% by volume or more,
the forming member has an ultrasonic vibration applying surface where an ultrasonic wave is applied by an ultrasound oscillator, and a rectangular vibration surface in contact with the electrode material,
a distance between the ultrasonic vibration applying surface and at least a part of the vibration surface is a multiple of a half-wavelength of ultrasonic longitudinal vibration which propagates in the forming member by the ultrasound oscillator, and
the vibration surface resonates with the ultrasonic wave applied to the ultrasonic vibration applying surface by the ultrasonic oscillator, and longitudinally vibrates over a width direction of the forming member, and the electrode material is spread on the surface of the collector foil by bringing the electrode material on the surface of the collector foil transported in the first direction into contact with the vibration surface of the forming member to form an electrode material film.

2. The method for manufacturing an electrode layer according to claim 1,
wherein the forming member is installed with a gap between the vibration surface and the surface of the collector foil, the gap being narrowed in the first direction.

3. The method for manufacturing an electrode layer according to claim 1 or 2,
wherein the forming member has a slit which is parallel to a direction of the longitudinal vibration and penetrates in a thickness direction.

4. The method for manufacturing an electrode layer according to claim 1 or 2,
wherein a frequency of the ultrasonic wave applied to the ultrasonic vibration applying surface of the forming member by the ultrasound oscillator is 15 kHz to 120 kHz.

5. The method for manufacturing an electrode layer according to claim 1 or 2,
wherein an amplitude of the longitudinal vibration on the vibration surface of the forming member is 1 µm to 100 µm at a portion where a gap between the vibration surface and the surface of the collector foil is narrowest.

6. The method for manufacturing an electrode layer according to claim 1 or 2,
wherein, in the forming member, as an area ratio between an area of the ultrasonic vibration applying surface and an area of the vibration surface is changed, a difference is introduced between an amplitude of the ultrasonic wave applied to the ultrasonic vibration applying surface by the ultrasound oscillator and an amplitude of the vibration surface.

7. The method for manufacturing an electrode layer according to claim 1 or 2,
wherein, in the step A, a thickness of the electrode material film is defined by a gap between a portion of the vibration surface of the forming member, where a distance with the surface of the collector foil is narrowest, and the surface of the collector foil.

8. A manufacturing apparatus for an electrode layer, comprising:
a transport device that transports, in a first direction, a collector foil which has an electrode material scattered on a surface; and
a film forming device that includes a forming member which has an ultrasonic vibration applying surface where an ultrasonic wave is applied and a rectangular vibration surface in contact with the electrode material, and is installed at a position where a certain distance is maintained from the surface of the collector foil, and an ultrasound oscillator which applies the ultrasonic wave to the ultrasonic vibration applying surface of the forming member,
wherein a distance between the ultrasonic vibration applying surface and at least a part of the vibration surface is a multiple of a half-wavelength of ultrasonic longitudinal vibration which propagates in the forming member by the ultrasound oscillator, and
the vibration surface resonates with the ultrasonic wave applied to the ultrasonic vibration applying surface by the ultrasonic oscillator, and longitudinally vibrates uniformly over a width direction of the forming member, and the electrode material is spread on the surface of the collector foil by bringing the electrode material on the surface of the collector foil transported in the first direction into contact with the vibration surface of the forming member to form an electrode material film.

9. The manufacturing apparatus for an electrode layer according to claim 8,
wherein the forming member is installed with a gap between the vibration surface and the surface of the collector foil, the gap being narrowed in the first direction.
